# EUROPEAN PATENT APPLICATION

(11) **EP 4 801 128 A1**
(43) Date of publication of application: **02.09.2026**
(21) Application number: 23956531.0
(22) Date of filing: 27.10.2023
(51) Int. Cl.: H04W 56/00

(54) **WIRELESS COMMUNICATION METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: RGTH
(86) International application number: PCT/CN2023/127334
(87) International publication number: WO 2025/086291

(57) **Abstract**

Provided are wireless communication methods, terminal devices and network devices. A wireless communication method comprises: a terminal device receiving first information sent by a network device, the first information being associated with a first signal, wherein the first signal comprises one or more of the following: a synchronization signal, cell broadcast information, and a reference signal associated with the cell broadcast information, and transmission resources for transmitting the first signal can be used for transmitting signals/information other than the first signal. **In** the embodiments of the present application, a first signal is introduced, and some or all of the transmission resources for transmitting the first signal can be used for transmitting signals/information other than the first signal. Compared with the conventional solution in which transmission resources for transmitting a second signal cannot be used for transmitting signals/information other than the second signal, the present application helps to increase the number of transmission resources for transmitting other signals/information, so as to reduce a transmission delay in transmitting other signals/information.

## Description

### TECHNICAL FIELD

The present application relates to the field of communication technologies, and more specifically, to a wireless communication method, a terminal device and a network device.

### BACKGROUND

In known communication systems, to avoid a situation where resource conflicts may be caused by transmitting a second signal (e.g., a synchronization signal block (SSB)), it is stipulated in some communication protocols that a transmission resource for transmitting the second signal is not used to map other signals/information other than the second signal. However, if communication is performed based on such a resource mapping approach, in a case where the number of transmission resources for the second signal increases significantly, it may result in other signals/information being unable to be transmitted in a timely manner.

### SUMMARY

The present application provides a wireless communication method, a terminal device and a network device. The various aspects of the present application are introduced below.

In a first aspect, a wireless communication method is provided, which includes: receiving, by a terminal device, first information transmitted by a network device, the first information being associated with a first signal; where the first signal includes one or more of: a synchronization signal, cell broadcast information, or a reference signal associated with the cell broadcast information; and a transmission resource for transmitting the first signal is available for transmitting other signals/information other than the first signal.

In a second aspect, a wireless communication method is provided, which includes: transmitting, by a network device, first information to a terminal device, the first information being associated with a first signal; where the first signal includes one or more of: a synchronization signal, cell broadcast information, or a reference signal associated with the cell broadcast information; and a transmission resource for transmitting the first signal is available for transmitting other signals/information other than the first signal.

In a third aspect, a terminal device is provided, which includes: a receiving unit, configured to receive first information transmitted by a network device, the first information being associated with a first signal; where the first signal includes one or more of: a synchronization signal, cell broadcast information, or a reference signal associated with the cell broadcast information; and a transmission resource for transmitting the first signal is available for transmitting other signals/information other than the first signal.

In a fourth aspect, a network device is provided, which includes: a transmitting unit, configured to transmit first information to a terminal device, the first information being associated with a first signal; where the first signal includes one or more of: a synchronization signal, cell broadcast information, or a reference signal associated with the cell broadcast information; and a transmission resource for transmitting the first signal is available for transmitting other signals/information other than the first signal.

In a fifth aspect, a terminal device is provided, which includes: a processor, a memory and a communication interface, where the memory is configured to store one or more computer programs, and the processor is configured to call the computer program(s) in the memory, to enable the terminal device to perform some or all of the steps in the method of the first aspect.

In a sixth aspect, a network device is provided, which includes: a processor, a memory and a transceiver, where the memory is configured to store one or more computer programs, and the processor is configured to call the computer program(s) in the memory, to enable the network device to perform some or all of the steps in the method of the second aspect.

In a seventh aspect, the embodiments of the present application provide a communication system, and the system includes the terminal device and/or the network device mentioned above. In another possible design, the system may further include other devices that interact with the terminal device or the network device in the solutions provided in the embodiments of the present application.

In an eighth aspect, the embodiments of the present application provide a computer-readable storage medium, where the computer-readable storage medium stores a computer program, and the computer program enables a communication device (e.g., the terminal device or the network device) to perform some or all of the steps in the methods of the various aspects mentioned above.

In a ninth aspect, the embodiments of the present application provide a computer program product, where the computer program product includes a non-transitory computer-readable storage medium storing a computer program, and the computer program is operable to enable a communication device (e.g., the terminal device or the network device) to perform some or all of the steps in the methods of various aspects mentioned above. In some implementations, the computer program product may be a software installation package.

In a tenth aspect, the embodiments of the present application provide a chip. The chip includes a memory and a processor. The processor may call a computer program from the memory and run the computer program, to implement some or all steps described in the methods of various aspects mentioned above.

In the embodiments of the present application, a first signal is introduced, and some or all transmission resources within the transmission resource for transmitting the first signal are available for transmitting other signals/information other than the first signal. Compared with traditional solutions where a transmission resource for transmitting a second signal is not available for transmitting other signals/information other than the second signal, the solution in the embodiments of the present application helps increase the number of transmission resources for transmitting other signals/information, thereby reducing the transmission delay for other signals/information.

### BRIEF DESCRIPTION OF DRAWINGS

FIG. 1 is a wireless communication system 100 to which the embodiments of the present application are applied.
FIG. 2 is a schematic diagram of a neural network applicable to the embodiments of the present application.
FIG. 3 is a schematic diagram of a convolutional neural network (CNN) applicable to the embodiments of the present application.
FIG. 4 illustrates a schematic diagram of transmission resources occupied by an SSB.
FIG. 5 is a schematic diagram of a first transmission mode in the embodiments of the present application.
FIG. 6 is a schematic flowchart of a wireless communication method according to the embodiments of the present application.
FIG. 7 is a flowchart of a transmission method for first information in Embodiment I of the present application.
FIG. 8 is a flowchart of a transmission method for first information in Embodiment II of the present application.
FIG. 9 is a flowchart of a transmission method for first information in Embodiment III of the present application.
FIG. 10 is a flowchart of a transmission method for first information in Embodiment IV of the present application.
FIG. 11 is a flowchart of a transmission method for first information in Embodiment V of the present application.
FIG. 12 is a flowchart of a method for transmitting second information in the embodiments of the present application.
FIG. 13 is a schematic diagram of a terminal device according to the embodiments of the present application.
FIG. 14 is a schematic diagram of a network device according to the embodiments of the present application.
FIG. 15 is a schematic structural diagram of a communication apparatus according to the embodiments of the present application.

### DETAILED DESCRIPTION

The technical solutions in the present application will be described below with reference to the accompanying drawings.

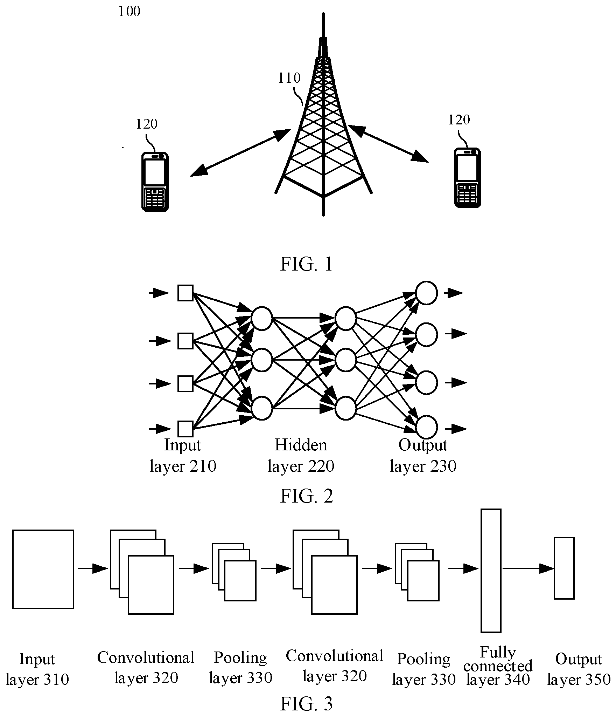

FIG. 1 illustrates a wireless communication system 100 to which the embodiments of the present application are applied. The wireless communication system 100 may include a network device 110 and a terminal device 120. The network device 110 may be a device that communicates with the terminal device 120. The network device 110 may provide communication coverage for a specific geographic area and may communicate with the terminal device 120 located within the coverage area.

FIG. 1 exemplarily illustrates a network device and two terminals. Optionally, the wireless communication system 100 may include multiple network devices, and there may be other quantities of terminal devices in the coverage area of each network device, which is not limited in the embodiments of the present application.

Optionally, the wireless communication system 100 may further include other network entities such as a network controller and a mobility management entity, which is not limited in the embodiments of the present application.

It should be understood that the technical solutions in the embodiments of the present application may be applied to various communication systems, such as a 5th generation (5G) system or a new radio (NR), a long term evolution (LTE) system, an LTE frequency division duplex (FDD) system, an LTE time division duplex (TDD) system, and the like. The technical solutions provided in the present application may further be applied to future communication systems, such as a 6th generation mobile communication system, a satellite communication system, and the like.

The terminal device in the embodiments of the present application may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent, or a user apparatus. The terminal device in the embodiments of the present application may refer to a device that provides voice and/or data connectivity to a user, and may be used to connect people, objects, and machines, such as handheld devices, vehicle-mounted devices and the like with wireless connection functions. The terminal device in the embodiments of the present application may be a mobile phone, a pad, a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in smart city, a wireless terminal in smart home, and the like. Optionally, the UE may serve as a base station. For example, the UE may act as a scheduling entity that provides sidelink signals between UEs in scenarios such as vehicle-to-everything (V2X) or device-to-device (D2D). For instance, cellular phones and vehicles communicate with each other using sidelink signals. Cellular phones and smart home devices communicate without relaying signals through a base station.

The network device in the embodiments of the present application may be a device for communicating with terminal devices, and the network device may also be referred to as an access network device or a radio access network device, for example, the network device may be a base station. The network device in the embodiments of the present application may refer to a radio access network (RAN) node (or device) that connects terminal devices to a wireless network. The base station may broadly cover or be interchangeable with various names, such as, NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, radio node, access point (AP), transmission node, transceiver node, base band unit (BBU), remote radio unit (RRU), active antenna unit (AAU), remote radio head (RRH), central unit (CU), distributed unit (DU), positioning node, and the like. The base station may be a macro base station, a micro base station, a relay node, a donor node or an analogous device, or a combination thereof. The base station may further refer to a communication module, a modem or a chip installed in the above devices or apparatuses. The base station may further be a device that serves base station functions in a mobile switching center or device-to-device (D2D), vehicle-to-everything (V2X) or machine-to-machine (M2M) communication, a network side device in 6G networks, or a device that serves base station functions in future communication systems. The base station may support networks with the same or different access technologies. The specific technologies or device forms adopted by the network device are not limited in the embodiments of the present application.

The base station may be fixed or mobile. For example, a helicopter or a drone may be configured to act as a mobile base station, and one or more cells may move according to the position of such mobile base station. In other examples, a helicopter or a drone may be configured as a device communicating with another base station.

In some deployments, the network device in the embodiments of the present application may refer to a CU or a DU, or the network device may include both a CU and a DU. The gNB may further include an AAU.

Network devices and terminal devices may be deployed on land, including indoors or outdoors, handheld or vehicle-mounted, or may also be deployed on water surfaces, or may be deployed on aircraft, balloons and satellites in the air. The scenarios in which network devices and terminal devices are located are not limited in the embodiments of the present application.

It should be understood that all or part of the functions of the communication devices in the present application may also be implemented by software running on hardware or by virtualized functions instantiated on a **p**latform (e.g., a cloud platform).

### Artificial intelligence (AI) model

In recent years, artificial intelligence research represented by neural networks has achieved significant results in many fields and will continue to play an important role in production and daily life of people for a long time to come. A neural network may be understood as a computational model composed of multiple interconnected neuron nodes, where the connections between nodes represent weighted values from input signals to output signals, commonly referred to as weights. Each node performs a weighted summation on different input signals and outputs through a specific activation function.

Common neural networks include CNN, recurrent neural network (RNN), deep neural network (DNN), and so on.

The neural network applicable to the embodiments of the present application is described below with reference to FIG. 2. The neural network illustrated in FIG. 2 may be classified into three types based on the positions of different layers: an input layer 210, hidden layers 220, and an output layer 230. Generally speaking, the first layer is the input layer 210, the last layer is the output layer 230, and the intermediate layers between the first and last layers are all hidden layers 220.

The input layer 210 is used to input data, where the input data, for example, may be a received signal received by a receiver. The hidden layers 220 are used to process the input data, such as performing decompression processing on the received signal. The output layer 230 is used to output the processed data, such as outputting the decompressed signal.

As illustrated in FIG. 2, the neural network includes multiple layers, each layer includes multiple neurons, and the neurons between layers may be fully connected or partially connected. For connected neurons, the output of a neuron in the previous layer may serve as the input for a neuron in the next layer.

With the continuous development of neural network research, neural network deep learning algorithms have been proposed in recent years, introducing more hidden layers into neural networks to form a DNN. More hidden layers enable the DNN to better model complex scenarios in the real world. Theoretically speaking, models with more parameters have higher complexity and greater "capacity", meaning that the models may accomplish more complex learning tasks. This type of neural network model is widely applied in pattern recognition, signal processing, optimization and combination, anomaly detection or other areas.

A CNN is a deep neural network with a convolutional structure, and its structure is illustrated in FIG. 3, which may include an input layer 310, convolutional layers 320, pooling layers 330, a fully connected layer 340 and an output layer 350.

Each convolutional layer 320 may include many convolutional operators, and the convolutional operators also referred to as kernels. The function of a convolutional operator may be seen as a filter extracting specific information from the input signal. The convolutional operator is essentially a weight matrix, which is usually predefined.

The weight values in these weight matrices need to be obtained by extensive training in practical applications. Each weight matrix formed by weight values obtained by training may extract information from the input signal, so as to help the CNN make correct predictions.

When a CNN has multiple convolutional layers, the initial convolutional layers often extract more general features, which may also be referred to as low-level features. As the depth of the CNN increases, the features extracted by the later convolutional layers become increasingly complex.

The pooling layers 330: as it is often necessary to reduce the number of training parameters, pooling layers are typically introduced periodically after convolutional layers. For example, as illustrated in FIG. 3, a pooling layer may follow a convolutional layer, or one or more pooling layers may follow multiple convolutional layers. In signal processing, the sole purpose of the pooling layer is to reduce the spatial size of the extracted information.

The fully connected layer 340: after processing by the convolutional layers 320 and the pooling layers 330, the CNN is still insufficient to output the required output information. As mentioned above, the convolutional layers 320 and the pooling layers 330 only extract features and reduce the parameters introduced by the input data. However, to generate the final output information (e.g., a bitstream of original information transmitted by a transmitter), the CNN further needs to utilize the fully connected layer 340. Generally, the fully connected layer 340 may include multiple hidden layers, and the parameters included in these multiple hidden layers may be pre-trained based on relevant training data for specific task types. For example, the task type may include decoding a data signal received by the receiver, or may further include performing channel estimation based on a pilot signal received by the receiver.

After the multiple hidden layers in the fully connected layer 340, the final layer of the entire CNN is the output layer 350, which is used to output results. Generally, the output layer 350 is configured with a loss function (e.g., a loss function similar to categorical cross-entropy), to calculate prediction error or to evaluate the degree of difference between the output result of the CNN model (also known as the prediction value) and the ideal result (also known as the true value).

To minimize the loss function, the CNN model needs to be trained. In some implementations, a backpropagation algorithm (BP) may be used to train the CNN model. The training process of BP consists of a forward propagation process and a backward propagation process. During the forward propagation process (as illustrated in FIG. 3, the propagation from 310 to 350 is the forward propagation), the input data is input into the above various layers of the CNN model, processed layer by layer and transmitted to the output layer. If the result output by the output layer differs significantly from the ideal result, the optimization objective is to minimize the above loss function, and the process switches to the backward propagation (as illustrated in FIG. 3, the propagation from 350 to 310 is the backward propagation). The partial derivatives of the optimization objective with respect to the weights of each neuron are calculated layer by layer, forming gradients of the optimization objective with respect to weight vectors, and the gradients serve as the basis for modifying the model weights. The training process of the CNN is completed during the weight modification process. When the above error reaches an expected value, the training process of the CNN ends.

It should be noted that the CNN illustrated in FIG. 3 is only an example of a convolutional neural network. In specific applications, the convolutional neural network may also exist in the form of other network models, which is not limited in the embodiments of the present application.

The purpose of RNNs is to process sequential data. In traditional neural network models (e.g., CNN models), the process is from the input layer to the hidden layer and then to the output layer, with full connections between layers and no connections between nodes within the same layer. However, such ordinary neural networks are ineffective for many problems. For example, to predict a next word in a sentence, the preceding words are generally needed because words in a sentence are not independent of each other. The reason why RNNs are called recurrent neural networks is that the current output of a sequence is also related to previous outputs. Specifically, the network memorizes previous information and applies it to the calculation of the current output, which means that nodes in the hidden layer are no longer unconnected but are connected, and the input of the hidden layer includes not only the output of the input layer but also the output of the hidden layer at the previous time. In theory, RNNs can process sequence data of any length.

The training for RNNs is the same as that for traditional artificial neural networks (ANNs). The BP error backpropagation algorithm is also used, but with one difference. If networking unfolding is performed on RNNs, the parameters W, U, and V are shared, whereas they are not shared in traditional neural networks. Moreover, when using a gradient descent algorithm, the output of each step depends not only on the network of the current step but also on the states of the network of several previous steps. For example, at t=4, it is necessary to backpropagate three steps, and various gradient needs to be added to the previous three steps. This learning algorithm is referred to as back propagation through time (BPTT).

Since there are artificial neural networks and convolutional neural networks, why are the recurrent neural networks needed? The reason is simple, whether it is a convolutional neural network or an artificial neural network, their underlying assumption is that elements are independent of each other, and inputs and outputs are also independent, such as cats and dogs. However, in the real world, many elements are interconnected, such as stock prices changing over time, or a person saying: "I love traveling, my favorite place is Yunnan, and I must visit __ when I get the chance". Here, to fill in the blank, humans would naturally know it should be filled with "Yunnan". This is because we infer it from the context, but it is quite challenging for machines to achieve this step. Thus, recurrent neural networks were developed, whose essence is to possess memory capabilities like humans. Therefore, their output depends on both the current input and memory.

### SSB Design

In some protocols (e.g., 5G NR), it is specified that an SSB may include a primary synchronization signal (PSS), a secondary synchronization signal (SSS), a physical broadcast channel (PBCH), and a reference signal of the PBCH (demodulation reference signal (DMRS)). The PSS and SSS are used to carry cell IDs (capable of carrying 1008 cell IDs), achieve time-frequency synchronization, and obtain timing information. The PSS, SSS and the reference signal of the PBCH (DMRS) may be used for measuring cell or beam signal strength/signal quality. The PBCH may carry information of beam and cell.

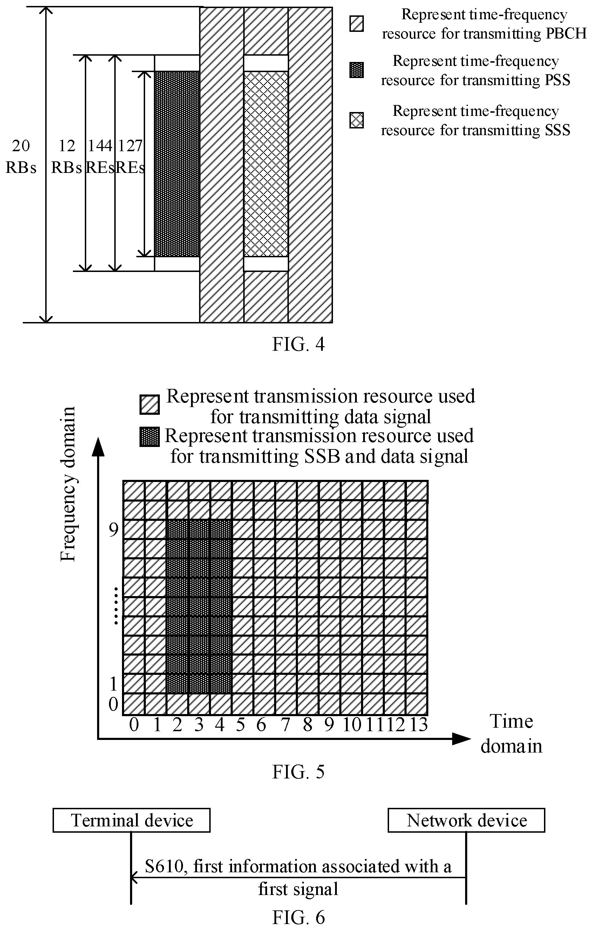

FIG. 4 illustrates a schematic diagram of transmission resources occupied by an SSB. As illustrated in FIG. 4, in the time domain, the SSB occupies 4 symbols, the primary synchronization signal (PSS) occupies the first symbol within the SSB, the SSS occupies the third symbol within the SSB, and the PBCH occupies the second symbol, the fourth symbol and part of the third symbol within the SSB. In the frequency domain, the span of an SSB is 20 resource blocks (RBs), that is, 240 resource elements (REs). The PSS and SSS occupy 127 REs within the 20 RBs.

It should be noted that in the SSB design of 5G NR, the above PSS, SSS, PBCH and PBCH DMRS all occupy independent time-frequency resources.

In some scenarios, an SSB may appear periodically in the time domain in the form of a group of SSBs, where one group of SSBs may include multiple SSBs. For example, in low-frequency bands, one group of SSBs may include up to 8 SSBs, while in high-frequency bands, one group of SSBs may include up to 64 SSBs. In some implementations, the transmission period of the SSB may be 5ms, 20ms, 40ms, etc.

In some scenarios, a bandwidth of a cell may include one or more frequency points, and accordingly, SSBs are transmitted on each of these one or more frequency points**.**

### Scheme for determining unavailable time-frequency resources based on SSB

In some communication systems, SSB transmission occupies specific time-frequency resources. Accordingly, the time-frequency resources occupied by the SSB need to be avoided during the process of data signal transmission. That is to say, when determining the time-frequency resources of data signals, the determination needs to be made around the transmission resources occupied by the SSB, i.e., taking the time-frequency resources other than the time-frequency resources occupied by the SSB as the time-frequency resources of the data signals.

In some communication systems, some schemes are specified for determining the positions of time-frequency resources unavailable for transmitting data signal around the time-frequency resources occupied by the SSB, or in other words, some methods for determining resource position for rate matching based on SSB are specified. The following is described combining with Manner I and Manner II.

Manner I: during the initial access procedure, the terminal device does not consider there is a resource overlap issue between the SSB and the remaining minimum system information (RMSI), that is, before the terminal device reads the information carried by the RMSI, the terminal device does not need to determine the positions of unavailable time-frequency resources based on the SSB.

For example, the description regarding the control channel is specified in section 10 of 3GPP protocol 38.213: if a terminal device monitors a PDCCH candidate for a Type0-physical downlink control channel (Type0-PDCCH) common search space (CSS) set on a serving cell according to the procedure described in clause 13, the terminal device may assume that no SS/PBCH block is transmitted in REs used for monitoring the PDCCH candidate on the ser*v*ing cell. The corresponding English e*x*pression in 3GPP protocol 38.213 is: "*If a UE monitors the PDCCH candidate for a Type0-PDCCH CSS set on the serving cell according to the procedure described in clause 13, the UE may assume that no SS*/*PBCH block is transmitted in REs used for monitoring the PDCCH candidate on the serving cell*".

For another example, the description regarding the data channel is specified in section 5.1.4 of 3GPP protocol 38.214: when receiving a physical downlink shared channel (PDSCH) scheduled with a system information-radio network temporary identifier (SI-RNTI) and a system information indicator in DCI is set to 0, the UE shall assume that no SS/PBCH block is transmitted in REs used for reception of the PDSCH. The corresponding English e*x*pression in 3GPP protocol 38.214 is: "*When receiving the PDSCH scheduled with SI-RNTI and the system information indicator in DCI is set to 0, the UE shall assume that no SS*/*PBCH block is transmitted in REs used by the UE for a reception of the PDSCH*".

Manner II: in RMSI, the network device may notify the terminal device of the SSB transmission situation of the current cell in the form of a bitmap. Accordingly, the terminal device may determine the transmission positions of the SSB based on the bitmap. These transmission positions will serve as unavailable resources for resource mapping during subsequent control information and data information transmission.

For example, the description regarding the control channel is specified in section 10 of 3GPP protocol 38.213: if the UE has received ssb-PositionsInBurst in a system information block (SIB) 1 and has not received ssb-PositionsInBurst in a serving cell common configuration "ServingCellConfigCommon", and if the UE does not monitor PDCCH candidates in a Type0-PDCCH CSS set and at least one RE for a PDCCH candidate overlaps with at least one RE corresponding to an SS/PBCH block index provided by ssb-PositionsInBurst in SIB1, the UE is not required to monitor the PDCCH candidate. The corresponding English e*x*pression in 3GPP protocol 38.213 is: "*If the UE has received ssb-PositionsInBurst in SIB1 and has not received ssb-PositionsInBurst in ServingCellConfigCommon for a serving cell and if the UE does not monitor PDCCH candidates in a Type0-PDCCH CSS set and at least one RE for a PDCCH candidate overlaps with at least one RE corresponding to a SS*/*PBCH block index provided by ssb-PositionsInBurst in SIB1, the UE is not required to monitor the PDCCH candidate*".

For another example, the description regarding the data channel is specified in section 5.1.4 of 3GPP protocol 38.214: when receiving one of the following information: a PDSCH scheduled with SI-RNTI and the system information indicator in DCI is set to 1, a random access-RNTI (RA-RNTI), a message B-RNTI (MsgB-RNTI), a paging-RNTI (P-RNTI), or a temporary cell-RNTI (TC-RNTI), the terminal device assumes that SS/PBCH block transmission is determined according to ssb-PositionsInBurst, and if the PDSCH resource allocation overlaps with PRBs containing SS/PBCH block transmission resources, the terminal shall assume that the PRBs containing the SS/PBCH block transmission resources are not available for PDSCH transmission in the OFDM symbols where SS/PBCH block is transmitted. The corresponding English e*x*pression is: "*When receiving the PDSCH scheduled with SI-RNTI and the system information indicator in DCI is set to 1, RA-RNTI, MSGB-RNTI, P-RNTI or TC-RNTI, the UE assumes SS*/*PBCH block transmission according to ssb-PositionsInBurst, and if the PDSCH resource allocation overlaps with PRBs containing SS*/*PBCH block transmission resources the UE shall assume that the PRBs containing SS*/*PBCH block transmission resources are not available for PDSCH in the OFDM symbols where SS*/*PBCH block is transmitted*".

Additionally, the periodicity information of the above SSB is notified to the terminal device in the RMSI, enabling the terminal device to fully understand the actual transmission situation of the SSB.

In known communication systems (e.g., 5G NR), to avoid a situation where resource conflicts may be caused by transmitting a second signal, it is stipulated in some communication protocols that a transmission resource for transmitting the second signal is not used to map other signals/information other than the second signal. However, if transmission is performed based on such a resource mapping approach, in a case where the number of transmission resources for the second signal increases significantly, it may result in other signals/information being unable to be transmitted in a timely manner.

Taking a case where the second signal is an SSB and other signals/information are data signals as an example, currently, the transmission resources occupied by a single SSB are already substantial (e.g., the SSB occupies 4 symbols as illustrated in FIG. 4). If, with the evolution and updates of wireless communication systems, the monitoring accuracy requirements for synchronization sequences such as PSS and SSS within the SSB continue to increase, and/or the demand for cell access essential information carried on the PBCH and master information block (MIB) continues to grow, the time-frequency resources occupied by a single SSB may become even more extensive. In this scenario, if the transmission is still performed by the resource mapping approach introduced above, that is, when the transmission resources of data signals overlap with the transmission resources of the SSB, the transmission resources of data signals are still selected to avoid the transmission resources of the SSB, the number of available transmission resources for transmitting data signals will be severely limited, which would increase the transmission delay for data signals and degrade the user experience.

Taking a case where the second signal is an SSB and other signals/information are data signals as an example, currently, a cell may include multiple SSBs for beam selection, where a beam corresponds to an SSB. If, as the deployment frequency band increases in the future, more beams are required to ensure cell coverage, the number of SSBs will significantly increase. In other words, more time domain resources are required to transmit SSBs for beam selection. In this scenario, if the transmission is still performed by the resource mapping approach introduced above, that is, when the transmission resources of data signals overlap with the transmission resources of the SSB, the transmission resources of data signals are still selected to avoid the transmission resources of the SSB, the number of available transmission resources for transmitting data signals will be severely limited, which would increase the transmission delay for data signals and degrade the user experience.

Taking a case where the second signal is an SSB and other signals/information are data signals as an example, if more cell discovery and access points are required in the frequency domain, more SSBs will be introduced in the frequency domain. In this scenario, if the transmission is still performed by the resource conflict avoidance approach introduced above, that is, when the transmission resources of data signals overlap with the transmission resources of the SSB, the transmission resources of data signals are still selected to avoid the transmission resources of the SSB, the available transmission resources for transmitting data signals will be severely limited, which would significantly increase the transmission delay for data signals and degrade the user experience.

Therefore, to address the above problems, the embodiments of the present application introduce a new signal (hereinafter also referred to as a "first signal"), whose transmission mode differs from that of the second signal. For example, the second transmission mode of the second signal is that the transmission resource for the second signal is not used to transmit other signals/information other than the second signal. Accordingly, the first transmission mode of the first signal is that part or all of the transmission resource for transmitting the first signal is available for transmitting other signals/information other than the first signal.

In some implementations, the first transmission mode may be used to indicate that part or all of the transmission resource occupied by the first signal overlaps with the transmission resources occupied by other signals/information. Alternatively, the first transmission mode is used to indicate that other signals/information are superimposed and transmitted on part or all of the transmission resource occupied by the first signal. Alternatively, the first transmission mode is used to indicate that rate matching is performed based on the first signal when transmitting other signals/information.

As mentioned above, the first signal transmitted based on the first transmission mode may occupy the same transmission resource as other signals/information, potentially increasing the reception difficulty for the receiving end. To improve the probability of the receiving end correctly receiving the first signal and other signals/information, the receiving end may perform reception based on a high-performance receiver, where the high-performance receiver may be, for example, a receiver based on a first model.

In the embodiments of the present application, the first model is not limited. In some implementations, the first model may be an AI model. For example, the first model may be any of the AI models introduced above. In other implementations, the first model may be a machine learning (ML) model.

In other implementations, the second transmission mode may be used to indicate that all of transmission resources occupied by the second signal do not overlap with the transmission resources occupied by other signals/information. Alternatively, the second transmission mode may be used to indicate that rate matching is not performed based on the second signal when transmitting other signals/information.

Accordingly, the second signal transmitted based on the second transmission mode does not occupy the same transmission resource as other signals/information, thus the reception difficulty for the receiving end is not increased. In this case, the receiving end may perform reception based on a traditional receiver, where the traditional receiver may be, for example, a receiver not based on the first model.

In some implementations, the first signal may be used for synchronization and/or carrying cell broadcast information. For example, the first signal may include one or more of: a synchronization signal, cell broadcast information, or a reference signal associated with the cell broadcast information. For example, the synchronization signal may include a primary synchronization signal and/or a secondary synchronization signal. The cell broadcast information may, for example, be cell broadcast information carried in the PBCH. The reference signal associated with the cell broadcast information may, for example, be a DMRS carried in the PBCH. As another example, the first signal may be an SSB. Generally, the SSB may include a PBCH channel (e.g., including a broadcast message carried on the PBCH and the DMRS signal of the PBCH), hence the SSB may also be referred to as a "synchronization signal block/PBCH block (SS/PBCH Block)".

Generally, a cell defining SS block (NCD-SSB) is used during the initial access procedure; and before the initial access procedure, there is no information exchange between the terminal device and the network device, so the network device cannot know whether the terminal device supports receiving the first signal. For example, for a terminal device that does not support the first model, it means that the terminal device does not support receiving the first signal. Conversely, for a terminal device that supports the first model, it means that the terminal device supports receiving the first signal. In this case, if the first signal is directly used as the CD-SSB, some terminal devices that do not support receiving the first signal will be unable to access the network, increasing the difficulty of initial access. Therefore, in some implementations, the first signal may be a non-cell defining SS block (NCD-SSB). Certainly, if the above problem is not considered, the first signal may also be the CD-SSB.

In some implementations, the first signal may be a signal used for measurement. For example, the first signal may be an SSB used in the beam selection process.

In some implementations, the signal type of the first signal is the same as that of the second signal introduced above, or in other words, the first signal and the second signal are two signals of the same type but with different transmission modes. For example, if the signal type of the second signal is SSB, then the signal type of the first signal is also SSB. Accordingly, the first signal may also be referred to as a "first-type SSB signal", and the second signal may be referred to as a "second-type SSB signal", where the second-type SSB signal may be a traditional SSB.

Certainly, in other scenarios, the first signal and the second signal may be regarded as two types of the same signal. Taking a case where both the first signal and the second signal are SSBs as an example, the first signal may be understood as the first-type SSB, and part or all of the transmission resource for transmitting the first-type SSB is used to transmit other signals/information. The second signal may be understood as the second-type SSB, and part or all of the transmission resource for transmitting the second-type SSB is not used to transmit other signals/information.

In some implementations, a frequency point corresponding to the first signal may be different from a frequency point corresponding to the second signal, which helps communication devices distinguish between the first signal and the second signal. Certainly, in the embodiments of the present application, if distinguishing between the first signal and the second signal is not considered, the frequency point corresponding to the first signal may be the same as the frequency point corresponding to the second signal.

In some implementations, the frequency point corresponding to the first signal and/or the frequency point corresponding to the second signal are predefined. For example, the frequency point corresponding to the first signal and/or the frequency point corresponding to the second signal may be predefined by the communication protocol. In other implementations, the frequency point corresponding to the first signal and/or the frequency point corresponding to the second signal are preconfigured. For example, the frequency point corresponding to the first signal and/or the frequency point corresponding to the second signal may be preconfigured when the communication device leaves the factory.

In the embodiments of the present application, other signals/information are not limited. In some implementations, other signals/information may include other signals and/or other information. For example, other signals may include a reference signal other than the first signal. As another example, other signals may include a data signal other than the first signal, that is, data carried on a data channel, where the data channel may include, for example, one of: a PDSCH, a physical uplink shared channel (PUSCH), or a physical sidelink shared channel (PSSCH). As another example, other information may include control information other than the first signal. In the embodiments of the present application, the control information is not limited. The control information may include downlink control information (DCI), that is, control information carried on the PDCCH. The control information may include uplink control information (UCI), that is, control information carried on the PUCCH. The control information may include sidelink control information (SCI), that is, control information carried on the PSCCH.

Additionally, in the embodiments of the present application, the transmission resources are not limited. In some implementations, the transmission resource may include one or more kinds of: time domain resource, frequency domain resource, or spatial domain resource. Taking a case where the transmission resource includes the time domain resource as an example, the time domain resource may be any type of time domain unit, such as a symbol, a slot, a mini-slot, a subframe, or the like. Certainly, in the embodiments of the present application, the time domain unit may further be other time domain units introduced in future communication systems. Taking a case where the transmission resource includes the frequency domain resource as an example, the frequency domain resource may be any type of frequency domain unit, such as a subcarrier, a BWP, a frequency band, or the like. Certainly, in the embodiments of the present application, the frequency domain unit may further be other frequency domain units introduced in future communication systems. Taking a case where the transmission resource includes the spatial domain resource as an example, the spatial domain resource may be a codebook, a codeword, or the like. Certainly, in the embodiments of the present application, the spatial domain resource may further be other spatial domain resources introduced in future communication systems.

For ease of understanding, the first transmission mode in the embodiments of the present application is described below with reference to FIG. 5 by taking a case where the first signal is an SSB and other signals/information are data signals as an example. As illustrated in FIG. 5, the index of each symbol within the RB is numbered incrementally starting from 0 in the order from early to late in the time domain, and the index of each subcarrier within the RB is numbered incrementally starting from 0 in the order from low to high in the frequency domain. Accordingly, the data signal is transmitted on all REs within the RB, and the transmission resources used for transmitting the SSB occupy symbols 2 to 4 in the time domain, and the transmission resources used for transmitting the SSB occupy subcarriers 1 to 9 in the frequency domain.

As introduced above, after introducing the first signal into the communication system, communication devices may need to exchange first information associated with the first signal. The first information in the embodiments of the present application is described below taking a scenario of communication between a terminal device and a network device as an example. FIG. 6 is a schematic flowchart of a wireless communication method according to the embodiments of the present application. The method illustrated in FIG. 6 includes step S610, and in the step S610, the network device transmits the first information to the terminal device. The first information in the embodiments of the present application is described below in conjunction with Embodiments I to V.

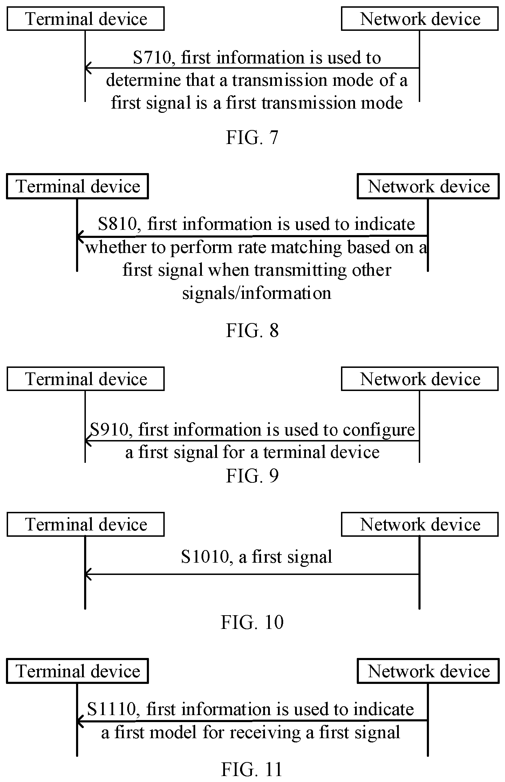

**Embodiment I:** referring to step S710 illustrated in FIG. 7, the first information is used to determine that a transmission mode of the first signal is a first transmission mode.

In some implementations, the first information being used to determine that the transmission mode of the first signal is the first transmission mode may include that the first information is used to indicate that the transmission mode of the first signal is the first transmission mode, or that the first information is used to indicate that a transmission mode of a signal to be transmitted is the first transmission mode.

In the embodiments of the present application, the network device may indicate the transmission mode of the first signal to the terminal device through the first information, which helps the terminal device determine whether to receive other signals/information on a transmission resource of the first signal, so as to improve the probability of correct reception by the terminal device.

In the embodiments of the present application, the first information is not specifically limited. In some implementations, the first information may be 1 bit, which helps reduce the overhead of transmitting the first information. For example, a value of the first information may be a first value, indicating that the transmission mode of the signal to be transmitted is the first transmission mode. For another example, the value of the first information may be a second value, indicating that the transmission mode of the signal to be transmitted is a second transmission mode. Here, the first value and the second value are different. For example, when the first value is 0, the second value is 1. For another example, when the first value is 1, the second value is 0.

In other implementations, if the first signal and the second signal are different types of the same signal, the first information may be used to indicate a signal type of the signal to be transmitted. Taking a case where the first signal and the second signal are different types of an SSB as an example, the first information may be used to indicate that the signal to be transmitted is a first-type SSB, or the first information may be used to indicate that the signal to be transmitted is a second-type SSB. Therefore, the first information may also be referred to as "SSB type information".

In the embodiments of the present application, the first information is not specifically limited. In some implementations, the first information may be 1 bit, which helps reduce the overhead of transmitting the first information. For example, the value of the first information may be a first value, indicating that the signal to be transmitted is the first-type SSB. For another example, the value of the first information may be a second value, indicating that the signal to be transmitted is the second-type SSB. Here, the first value and the second value are different. For example, when the first value is 0, the second value is 1. For another example, when the first value is 1, the second value is 0.

The content of the first information in the embodiments of the present application has been introduced above, and the indication granularity of the first information in the embodiments of the present application is introduced below. It should be understood that the first information with different granularities introduced below may be used in combination with any one of the content of the first information introduced above.

In some implementations, the granularity indicated by the first information may be a frequency point, and thus, it may be understood that the first information is "frequency point-level indication".

That is, the first signal corresponds to a target frequency point, and the first information is used to indicate that one or more signals corresponding to the target frequency point are in the first transmission mode. Here, the one or more signals corresponding to the target frequency point are of the same signal type as the first signal. For example, each of the one or more signals corresponding to the target frequency point includes one or more of: a synchronization signal, cell broadcast information, or a reference signal associated with the cell broadcast information.

Taking the first signal being an SSB as an example, the first information is used to indicate that one or more SSBs corresponding to the target frequency point are in the first transmission mode. Alternatively, taking the first signal being the first-type SSB as an example, the first information is used to indicate that one or more SSBs corresponding to the target frequency point are first-type SSBs.

In other implementations, the granularity indicated by the first information may be a cell, and thus, it may be understood that the first information is "cell-level indication". In the embodiments of the present application, the above target cell is a serving cell or a neighboring cell, where the neighboring cell may include an intra-frequency neighboring cell or an inter-frequency neighboring cell.

That is to say, the first signal corresponds to the target cell, and the first information is used to indicate that one or more signals corresponding to the target cell are in the first transmission mode. Here, each of the one or more signals corresponding to the target cell includes one or more of: a synchronization signal, cell broadcast information, or a reference signal associated with the cell broadcast information.

Taking the first signal being an SSB as an example, the first information is used to indicate that one or more SSBs corresponding to the target cell are in the first transmission mode. Alternatively, taking the first signal being the first-type SSB as an example, the first information is used to indicate that one or more SSBs corresponding to the target cell are first-type SSBs.

In other implementations, the granularity indicated by the first information may be a cell group, and thus, it may be understood that the first information is "cell group-level indication". Here, the cell group may include one or more neighboring cells, where the neighboring cell(s) may include an intra-frequency cell with the same frequency as the serving cell, and/or an inter-frequency cell with a different frequency from the serving cell.

That is to say, the first signal corresponds to the target cell, the target cell belongs to the target cell group, and the first information is used to indicate that one or more signals corresponding to the target cell group are in the first transmission mode. Here, each of the one or more signals corresponding to the target cell group includes one or more of: a synchronization signal, cell broadcast information, or a reference signal associated with the cell broadcast information.

Taking the first signal being an SSB as an example, the first information is used to indicate that one or more SSBs corresponding to the target cell group are in the first transmission mode. Alternatively, taking the first signal being the first-type SSB as an example, the first information is used to indicate that one or more SSBs corresponding to the target cell group are first-type SSBs.

In the embodiments of the present application, the manner of carrying the first information is not limited. In some implementations, the first information may be carried in a radio resource control (RRC) message and/or a system message. Here, the RRC message may, for example, include an RRC reconfiguration message, and the system message may, for example, include an MIB or an SIB (e.g., one or more of SIB1, SIB2 or SIB3).

For ease of understanding, taking the first information being SSB type information as an example, the manner of carrying the first information is introduced below combined with Examples I to XI.

**Example I:** the SSB type information (denoted as "ssb-type") is carried in the MIB, to indicate that the SSB type transmitted by the current serving cell is the first-type SSB, i.e., the cell-level indication introduced above. Here, the MIB may be represented by codes shown below. If the value of the SSB type information (SSB type value) is 1, it indicates that the SSB type of the SSB transmitted by the current serving cell is the first-type SSB. If the value of the SSB type information is 0, it indicates that the SSB type of the SSB transmitted by the current serving cell is the second-type SSB.

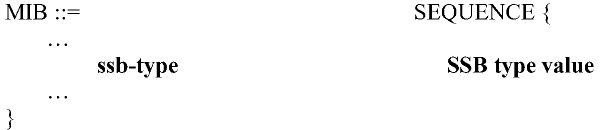

**Example II:** the SSB type information (denoted as "ssb-type") is carried in SIB1, to indicate that the SSB type transmitted by the current serving cell is the first-type SSB, i.e., the cell-level indication introduced above. Here, SSB1 may be represented by codes shown below. If the value of the SSB type information (SSB type value) is 1, it indicates that the SSB type of the SSB transmitted by the current serving cell is the first-type SSB. If the value of the SSB type information is 0, it indicates that the SSB type of the SSB transmitted by the current serving cell is the second-type SSB.

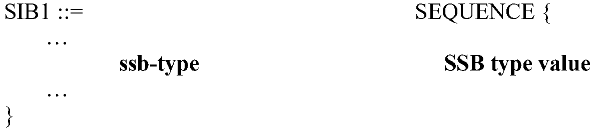

It should be noted that carrying the SSB type information (denoted as "ssb-type") in SIB2 is similar to carrying the SSB type information (denoted as "ssb-type") in SIB1 as described above, which will not be repeated here for brevity.

**Example III:** the SSB type information (denoted as "ssb-type") is carried in SIB3, to indicate the SSB type of the intra-frequency cell (or "intra-frequency neighboring cell"). For SIB3, the information in SIB3 is mainly used for intra-frequency cell reselection. Accordingly, if the SSB type information carried in SIB3 corresponds to all cells under the frequency point, the SSB type information indicates that the SSB type of all SSBs under the frequency point corresponding to the SIB3 message (or the SSBs of all cells under the corresponding frequency point), i.e., the frequency point-level indication introduced above. Here, SSB3 may be represented by codes shown below. If the value of the SSB type information (SSB type value) is 1, it indicates that the SSB type of all SSBs under the corresponding frequency point is the first-type SSB. If the value of the SSB type information is 0, it indicates that the SSB type of all SSBs under the corresponding frequency point is the second-type SSB.

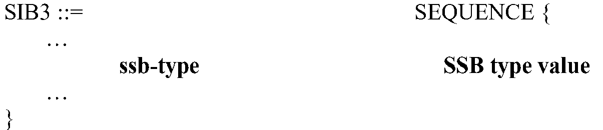

**Example IV:** the SSB type information (denoted as "ssb-type") is carried in SIB4, to indicate that the SSB type of an inter-frequency cell (or "inter-frequency neighboring cell") is the first-type SSB. For SIB4, the information in SIB4 is used for inter-frequency cell reselection. Accordingly, if the SSB type information carried in SIB4 corresponds to all cells under the inter-frequency point, the SSB type information indicates the SSB type of all SSBs under the frequency point corresponding to the SIB4 message (or the SSBs of all cells under the corresponding frequency point), i.e., the frequency point-level indication introduced above. If the value of the SSB type information (SSB type value) is 1, it indicates that the SSB type of all SSBs under the corresponding frequency point is the first-type SSB. If the value of the SSB type information is 0, it indicates that the SSB type of all SSBs under the corresponding frequency point is the second-type SSB.

In some scenarios, SIB4 may indicate inter-frequency cell reselection information under multiple frequency points. SIB4 may be represented by codes shown below, i.e., the inter-frequency cell reselection information under the multiple frequency points may be carried in an inter-frequency cell reselection information list (denoted as "interFreqCarrierFreqList").

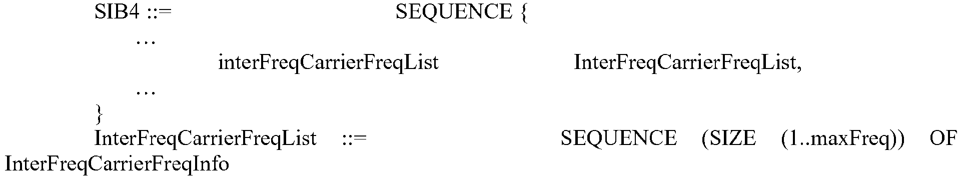

In some implementations, a respective piece of SSB type information may be carried in the inter-frequency cell information (denoted as "InterFreqCarrierFreqInfo") corresponding to each frequency point in the inter-frequency cell reselection information list, to indicate the SSB type of the SSBs corresponding to each frequency point, i.e., the frequency point-level indication introduced above. If the value of the SSB type information (SSB type value) corresponding to a certain frequency point in the inter-frequency cell reselection information list is 1, it indicates that the SSB type of all SSBs under the corresponding frequency point is the first-type SSB. If the value of the SSB type information (SSB type value) corresponding to a certain frequency point in the inter-frequency cell reselection information list is 0, it indicates that the SSB type of all SSBs under the corresponding frequency point is the second-type SSB.

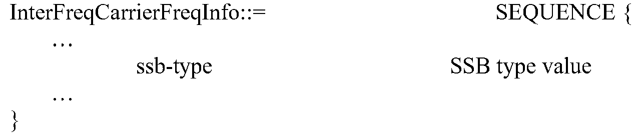

The implementations of the SSB type information carried in SIB3 and SIB4 being the frequency point-level indication are described above. The implementations of cell-level indication or cell group-level indication in the embodiments of the present application will be introduced below combined with Examples V to XI.

**Example V:** the SSB type information (denoted as "ssb-type") is carried in SIB3, to indicate the SSB type of the intra-frequency cell (or "intra-frequency neighboring cell"). For SIB3, the information in SIB3 is mainly used for intra-frequency cell reselection. Accordingly, the SSB type information list may be carried in SIB3, multiple pieces of SSB type information are included in the SSB type information list, each piece of SSB type information may correspond to one intra-frequency cell in SIB3, and thus, the SSB type information indicates the SSB type of all SSBs in the corresponding intra-frequency cell, i.e., the cell-level indication. If the value of the SSB type information (the SSB type value) is 1, it indicates that the SSB type of all SSBs in the corresponding intra-frequency cell is the first-type SSB. If the value of the SSB type information is 0, it indicates that the SSB type of all SSBs in the corresponding intra-frequency cell is the second-type SSB.

For example, ssb-cell-list (SSB type information-cell list) is included in SIB3, and multiple pieces of SSB type information and their corresponding intra-frequency cells are included in the SSB type information list. Therefore, the SSB type information list is represented as [ssb - type*ᵢ*; CELL*ᵢ*], i.e., an *i*-th intra-frequency cell and its corresponding SSB type information in the SSB type information list, *i* being a positive integer.

**Example VI:** the SSB type information (denoted as "ssb-type") is carried in SIB3, to indicate the SSB type of the intra-frequency cell (or "the intra-frequency neighboring cell"). For SIB3, the information in SIB3 is mainly used for intra-frequency cell reselection. Accordingly, the SSB type information list may be carried in SIB3, multiple pieces of SSB type information are included in the SSB type information list, each piece of SSB type information may correspond to one group of intra-frequency cells in SIB3, and thus, the SSB type information indicates the SSB type of all SSBs in the corresponding group of intra-frequency cells, i.e., the cell group-level indication. If the value of the SSB type information (the SSB type value) is 1, it indicates that the SSB type of all SSBs in the corresponding group of intra-frequency cells is the first-type SSB. If the value of the SSB type information is 0, it indicates that the SSB type of all SSBs in the corresponding group of intra-frequency cells is the second-type SSB. Here, a group of intra-frequency cells may include one or more intra-frequency cells.

For example: ssb-cell-list (SSB type information-cell list) is included in SIB3, and multiple pieces of SSB type information and their corresponding groups of intra-frequency cells are included in the SSB type information list. Therefore, the SSB type information list is represented as [ssb - type*ᵢ*; CELL SET*ᵢ*], i.e., an *i*-th group of intra-frequency cells and its corresponding SSB type information in the SSB type information list, *i* being a positive integer.

**Example VII:** the SSB type information (denoted as "ssb-type") is carried in SIB4, to indicate the SSB type of the inter-frequency cell (or "inter-frequency neighboring cell"). For SIB4, the information in SIB4 is mainly used for inter-frequency cell reselection. Accordingly, the SSB type information list may be carried in SIB4, multiple pieces of SSB type information are included in the SSB type information list, each piece of SSB type information may correspond to one inter-frequency cell in SIB4, and thus, the SSB type information indicates the SSB type of all SSBs in the corresponding inter-frequency cell, i.e., the cell-level indication. If the value of the SSB type information (SSB type value) is 1, it indicates that the SSB type of all SSBs in the corresponding inter-frequency cell is the first-type SSB. If the value of the SSB type information is 0, it indicates that the SSB type of all SSBs in the corresponding inter-frequency cell is the second-type SSB.

For example: ssb-cell-list (SSB type information-cell list) is included in SIB4, and multiple pieces of SSB type information and their corresponding inter-frequency cells are included in the SSB type information list. Therefore, the SSB type information list is represented as [ssb - type*ᵢ*; CELL*ᵢ*], i.e., an *i*-th inter-frequency cell and its corresponding SSB type information in the SSB type information list, *i* being a positive integer.

**Example VIII:** the SSB type information (denoted as "ssb-type") is carried in SIB4, to indicate the SSB type of the inter-frequency cell (or "inter-frequency neighboring cell"). For SIB4, the information in SIB4 is mainly used for inter-frequency cell reselection. Accordingly, the SSB type information list may be carried in SIB4, multiple pieces of SSB type information are included in the SSB type information list, each piece of SSB type information may correspond to one group of inter-frequency cells in SIB4, and thus, the SSB type information indicates the SSB type of all SSBs in the corresponding group of inter-frequency cells, i.e., the cell group-level indication. If the value of the SSB type information (SSB type value) is 1, it indicates that the SSB type of all SSBs in the corresponding group of inter-frequency cells is the first-type SSB. If the value of the SSB type information is 0, it indicates that the SSB type of all SSBs in the corresponding group of inter-frequency cells is the second-type SSB. Here, a group of inter-frequency cells may include one or more inter-frequency cells.

For example: ssb-cell-list (SSB type information-cell list) is included in SIB4, and multiple pieces of SSB type information and their corresponding groups of inter-frequency cells are included in the SSB type information list. Therefore, the SSB type information list is represented as [ssb - type*ᵢ*; CELL SET*ᵢ*], i.e., an *i*-th group of inter-frequency cells and its corresponding SSB type information in the SSB type information list, *i* being a positive integer.

**Example IX:** the SSB type information (denoted as "ssb-type") is carried in the radio resource control (RRC) reconfiguration message, where the RRC reconfiguration message is used to reconfigure the measurement object (denoted as "MeasObjectNR") configuration. Accordingly, the SSB type information may be carried in MeasObjectNR, the SSB type information is used to indicate the SSB type of all SSBs under the frequency point corresponding to the RRC reconfiguration message (or SSBs of all cells under the corresponding frequency point), i.e., the frequency point-level indication. The RRC reconfiguration message may be referred to the codes shown below. If the value of the SSB type information (the SSB type value) is 1, it indicates that the SSB type of all SSBs under the corresponding frequency point is the first-type SSB. If the value of the SSB type information is 0, it indicates that the SSB type of all SSBs under the corresponding frequency point is the second-type SSB.

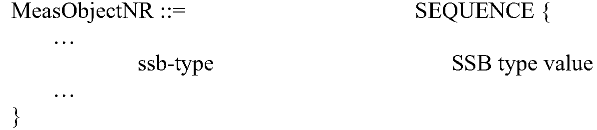

**Example X:** the SSB type information (denoted as "ssb-type") is carried in the RRC reconfiguration message, where the RRC reconfiguration message is used to reconfigure the measurement object (denoted as "MeasObjectNR"). Accordingly, the SSB type information list may be carried in MeasObjectNR, multiple pieces of SSB type information are included in the SSB type information list, each piece of SSB type information may correspond to one cell, and thus, the SSB type information indicates the SSB type of all SSBs in the corresponding cell, i.e., the cell-level indication. If the value of the SSB type information (SSB type value) is 1, it indicates that the SSB type of all SSBs in the corresponding cell is the first-type SSB. If the value of the SSB type information is 0, it indicates that the SSB type of all SSBs in the corresponding cell is the second-type SSB.

For example: ssb-cell-list (SSB type information-cell list) is included in MeasObjectNR, and multiple pieces of SSB type information and their corresponding cells are included in the SSB type information list. Therefore, the SSB type information list is represented as [ssb - type*ᵢ*; CELL*ᵢ*], i.e., an *i*-th cell and its corresponding SSB type information in the SSB type information list, *i* being a positive integer.

**Example XI:** the SSB type information (denoted as "ssb-type") is carried in the RRC reconfiguration message, where the RRC reconfiguration message is used to reconfigure the measurement object (denoted as "MeasObjectNR"). Accordingly, the SSB type information list may be carried in MeasObjectNR, multiple pieces of SSB type information are included in the SSB type information list, each piece of SSB type information may correspond to one cell group, and thus, the SSB type information indicates the SSB type of all SSBs in the corresponding cell group, i.e., the cell group-level indication. If the value of the SSB type information (SSB type value) is 1, it indicates that the SSB type of all SSBs in the corresponding cell group is the first-type SSB. If the value of the SSB type information is 0, it indicates that the SSB type of all SSBs in the corresponding cell group is the second-type SSB. Here, a cell group may include one or more cells.

For example, ssb-cell-list (SSB type information-cell list) is included in MeasObjectNR, and multiple pieces of SSB type information and their corresponding groups of cells are included in the SSB type information list. Therefore, the SSB type information list is represented as [ssb - type*ᵢ*; CELL SET*ᵢ*], i.e., an *i*-th group of cells and its corresponding SSB type information in the SSB type information list, *i* being a positive integer.

**Embodiment II:** referring to step S810 illustrated in FIG. 8, the first information is used to indicate one or more of: whether to perform rate matching based on the first signal when transmitting other signals/information; transmitting or not transmitting other signals/information on a transmission resource occupied by the first signal; a transmission resource used for transmitting other signals/information within the transmission resource occupied by the first signal; or a transmission resource not used for transmitting other signals/information within the transmission resource occupied by the first signal.

Taking a case where the first information indicates that rate matching is performed based on the first signal when transmitting other signals/information as an example, accordingly, the receiving end of the first information (e.g., the terminal device) may determine, based on the first information, that other signals/information do not need to be received on the transmission resource of the first signal.

Taking a case where the first information indicates that rate matching is not performed based on the first signal when transmitting other signals/information as an example, accordingly, the receiving end of the first information (e.g., the terminal device) may determine, based on the first information, that other signals/information need to be received on the transmission resource of the first signal.

Taking a case where the first information indicates that other signals/information are not transmitted on the transmission resource occupied by the first signal as an example, accordingly, the receiving end of the first information (e.g., the terminal device) may determine, based on the first information, that other signals/information do not need to be received on the transmission resource of the first signal.

Taking a case where the first information indicates that other signals/information are transmitted on the transmission resource occupied by the first signal as an example, accordingly, the receiving end of the first information (e.g., the terminal device) may determine, based on the first information, that other signals/information need to be received on the transmission resource of the first signal.

Taking a case where the first information indicates the transmission resource used for transmitting other signals/information within the transmission resource occupied by the first signal as an example, in some scenarios, other signals/information may be transmitted on part or all of the transmission resource occupied by the first signal. In this case, the first information may be used to indicate which transmission resource within the transmission resource occupied by the first signal is used for transmitting other signals/information. In other words, the first information indicates the position of the transmission resource where other signals/information are transmitted within the transmission resource occupied by the first signal, where the position may include, for example, the time domain position and/or the frequency domain position.

Accordingly, the receiving end of the first information (e.g., the terminal device) may determine, based on the first information, that other signals/information need to be received on the transmission resource that the first information indicates is used for transmitting other signals/information.

Taking a case where the first information indicates the transmission resource not used for transmitting other signals/information within the transmission resource occupied by the first signal as an example, in some scenarios, other signals/information may be transmitted on part or all of the transmission resource occupied by the first signal. In this case, the first information may be used to indicate which transmission resource within the transmission resource occupied by the first signal is not used for transmitting other signals/information. In other words, the first information indicates the position of the transmission resource where other signals/information are not transmitted within the transmission resource occupied by the first signal, where the position may include, for example, the time domain position and/or the frequency domain position.

Accordingly, the receiving end of the first information (e.g., the terminal device) may determine, based on the first information, that other signals/information do not need to be received on the transmission resource that the first information indicates is not used for transmitting other signals/information.

In the embodiments of the present application, the receiving end of the first information may determine the transmission resource used for transmitting other signals/information based on the first information, so as to determine whether other signals/information need to be received on the corresponding transmission resource, which helps improve the flexibility of transmitting other signals/information.

In other implementations, the transmission resources used for transmitting other signals/information may be predefined, which helps reduce the overhead of transmitting the first information. For example, it may be predefined through the protocol that rate matching is performed (or not performed) based on the first signal when transmitting other signals/information. For another example, it is predefined through the protocol that the transmission resource occupied by the first signal is utilized (or not utilized) when transmitting other signals/information. For another example, it is predefined through the protocol that it is necessary (or unnecessary) to receive other signals/information on the transmission resource occupied by the first signal when receiving other signals/information. Certainly, in the embodiments of the present application, the transmission resources used for transmitting other signals/information may be preconfigured. For example, the transmission resources used for transmitting other signals/information may be preconfigured by the network device, which helps reduce the overhead of transmitting the first information.

As introduced above, other signals/information may include data signals, control information and other reference signals. Therefore, in order to improve the accuracy of communication, the first information may further indicate a specific type of other signals/information. In some implementations, the first information may be used to indicate that other signals/information are data signals. For example, other signals/information include data signals carried on the PDSCH. Accordingly, the first information may be used to indicate that rate matching is performed (or not performed) based on the first signal when transmitting the data signals on the PDSCH. For another example, other signals/information include data signals carried on the PDSCH. Accordingly, the first information may be used to indicate that the transmission resource of the first signal is occupied (or not occupied) when transmitting the data signals on the PDSCH. For another example, other signals/information include data signals carried on the PDSCH. Accordingly, the first information may be used to indicate that reception needs (does not need) to be performed on the transmission resource of the first signal when receiving the data signals on the PDSCH.

In other implementations, the first information is used to indicate that other signals/information are control information. Certainly, in the embodiments of the present application, the first information may be used to indicate that other signals/information are other reference signals. For example, other signals/information include control information carried on the PDCCH. Accordingly, the first information may be used to indicate that rate matching is performed (or not performed) based on the first signal when transmitting the control information on the PDCCH. For another example, other signals/information include control information carried on the PDCCH. Accordingly, the first information may be used to indicate that the transmission resource of the first signal is occupied (or not occupied) when transmitting the control information on the PDCCH. For another example, other signals/information include control information carried on the PDCCH. Accordingly, the first information may be used to indicate that reception needs (does not need) to be performed on the transmission resource of the first signal when receiving the control information on the PDCCH.

In the embodiments of the present application, the first information may further indicate a specific control information format. In some implementations, if other signals/information include control information carried on the PDCCH, the first information may indicate that other signals/information include DCI of a specific format, e.g., DCI format X, X being a positive integer.

It should be noted that the first information indicating the specific type of other signals/information and the first information for determining whether the transmission resource occupied by the first signal is used for transmitting other signals/information introduced above may be the same information (i.e., the first information), or the above two types of information may be different, which is not limited in the embodiments of the present application. For example, information 1 indicates the transmission resource used for transmitting other signals/information within the transmission resource occupied by the first signal, and accordingly, information 2 indicates that other signals/information are control information.

In order to reduce the overhead of transmitting the first information, the specific type of other signals/information may be predefined. For example, it may be predefined through the protocol that rate matching is performed (or not performed) based on the first signal when transmitting the data signals on the PDSCH. For another example, it may be predefined through the protocol that the transmission resource of the first signal is occupied (or not occupied) when transmitting the data signals on the PDSCH. For another example, it may be predefined through the protocol that reception needs (does not need) to be performed on the transmission resource of the first signal when receiving the data signals on the PDSCH.

For another example, it may be predefined through the protocol that rate matching is performed (or not performed) based on the first signal when transmitting control information on the PDCCH. For another example, it may be predefined through the protocol that the transmission resource of the first signal is occupied (or not occupied) when transmitting control information on the PDCCH. For another example, it may be predefined through the protocol that reception needs (does not need) to be performed on the transmission resource of the first signal when receiving control information on the PDCCH.

**Embodiment III:** referring to step S910 illustrated in FIG. 9, the first information is used to configure the first signal for the terminal device.

In the embodiments of the present application, the first information may be used to configure the first signal for the terminal device, to enable the terminal device to determine how to receive the first information, so as to improve the success rate of receiving the first signal.

In some implementations, the first information is used to configure one or more of: a transmission format of the first signal; a time domain position of the first signal; a frequency domain position of the first signal; or a transmission period of the first signal.

Taking the first information being used to configure the transmission format of the first signal as an example, the transmission format is used to indicate one or more of: a subcarrier spacing for transmitting the first signal; a start symbol position for transmitting the first signal; or the maximum number of first signals within a transmission period. For example, if the transmission format is Format 1, it indicates that the subcarrier spacing of the first signal is 15 kHz, the start symbol position of the first signal is {2,8}+14*n, and the maximum number of first signals within the transmission period is 4.

Taking the first information being used to configure the time domain position of the first signal as an example, in other words, the first information is used to indicate the position of the time domain resource occupied by the first signal.

Taking the first information being used to configure the frequency domain position of the first signal as an example, in other words, the first information is used to indicate the position of the frequency domain resource occupied by the first signal.

Taking the first information being used to configure the transmission period of the first signal as an example, in other words, the first information is used to indicate the time length of the transmission period for transmitting the first signal.

**Embodiment IV:** referring to step S1010 illustrated in FIG. 10, the first information includes the first signal, that is, the network device may transmit the first signal to the terminal device.

**Embodiment V:** referring to step S1110 illustrated in FIG. 11, the first information is used to indicate a first model for receiving the first signal.

As mentioned earlier, since the first signal may occupy the same transmission resource as other signals/information, such transmission mode imposes high requirements on the receiving performance of the receiving end. In some scenarios, the receiving end may perform reception based on the first model, to improve reception performance. However, different models may have different reception performance. In such cases, the first model used for receiving the first signal may be indicated through the first information, so as to increase the possibility of the first signal being correctly received.

In some implementations, the first information includes the first model and/or a model identifier of the first model.

Taking the first information including the first model as an example, that is, the network device may transmit the first model to the terminal device through the first information. In the embodiments of the present application, a manner for transmitting the first model is not specifically limited. In some implementations, the network device may transmit the model parameter of the first model to the terminal device through the first information. In other implementations, the network device may transmit the model structure of the first model to the terminal device through the first information. In other implementations, the network device may transmit the first model itself to the terminal device through the first information (e.g., including both the model parameter and the model structure of the first model). For example, the first model that may perform channel estimation based on the first signal may be carried in the first information. For another example, the first model that is available for receiving and parsing other information/signals at the transmission position of the first signal may be carried in the first information.

Taking the first information including the model identifier of the first model as an example, that is, the network device may indicate the first model to the terminal device through the first information. The model identifier of the first model is carried in the first information and the first model is indicated to the terminal device through the model identifier, which helps reduce the overhead of transmitting the first information. For example, the model identifier of the first model may be carried in the first information, where the first model is used for performing channel estimation based on the first signal. For another example, the model identifier of the first model may be carried in the first information, where the first model is available for receiving and parsing other information/signals at the transmission position of the first signal.

Certainly, in the embodiments of the present application, the solution where the first model is carried in the first information and the solution where the model identifier of the first model is carried in the first information may be used independently, or may be used in combination, which is not limited in the embodiments of the present application.

In some implementations, the first information is used to indicate a dataset for training the first model; and/or the first information includes an identifier of the dataset.

Taking the first information including the dataset as an example, that is, the network device may transmit the dataset for training the first model to the terminal device through the first information. Accordingly, the terminal device may perform model training based on the dataset to obtain the first model. For example, the dataset may be carried in the first information, and the dataset is used to perform training on the first model, where the first model may perform channel estimation based on the first signal. For another example, the dataset may be carried in the first information, and the dataset is used to perform training on the first model, where the first model is available for receiving and parsing other information/signals at the transmission position of the first signal.

Taking the first information including the identifier of the dataset as an example, that is, the network device may indicate the dataset used for training the first model to the terminal device through the first information. The identifier of the dataset is carried in the first information and the dataset is indicated to the terminal device through the identifier of the dataset, which helps reduce the overhead of transmitting the first information. For example, the identifier of the dataset may be carried in the first information, and the dataset is used to perform training on the first model, where the first model may perform channel estimation based on the first signal. For another example, the identifier of the dataset may be carried in the first information, and the dataset is used to perform training on the first model, where the first model is available for receiving and parsing other information/signals at the transmission position of the first signal.

Certainly, in the embodiments of the present application, the solution where the dataset is carried in the first information and the solution where the identifier of the dataset is carried in the first information may be used independently, or may be used in combination, which is not limited in the embodiments of the present application.

As introduced above, the first signal may be transmitted using the same transmission resource as other information/signals, thus imposing higher reception performance for the receiving end (e.g., the terminal device). In this case, some terminal devices have lower capabilities and may not correctly receive the first signal and other information/signals. If the network device still transmits the first signal and other information/signals on the same transmission resource, it may lead to wastage of transmission resources. For example, the first signal and other information/signals need to be received based on the first model, while the terminal device does not support running the first model. In this case, if the network device still transmits the first signal and other information/signals on the same transmission resource, it may lead to wastage of transmission resources.

Therefore, to address the above problem, the embodiments of the present application further provide a wireless communication method. In this method, the terminal device may indicate to the network device whether to support receiving the first signal through second information, which helps the network device know the capability of the terminal device and determine whether to transmit the first signal based on the capability, thereby improving the utilization of transmission resources.

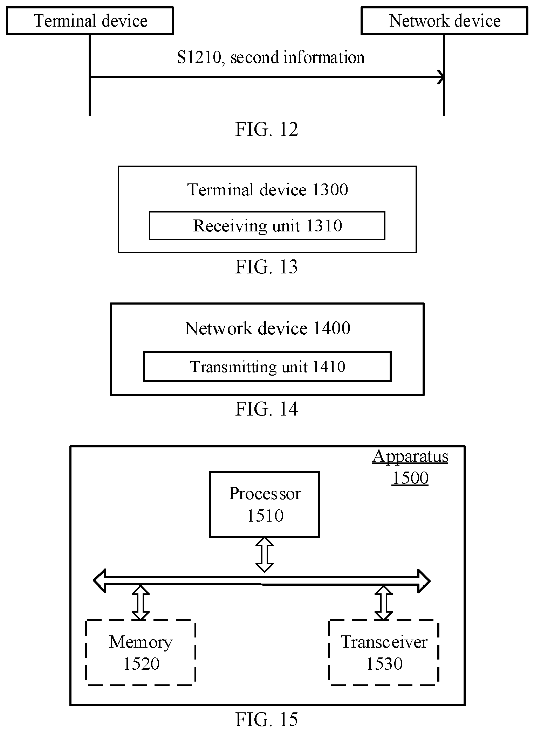

FIG. 12 illustrates a flowchart of a method for transmitting second information in the embodiments of the present application. As illustrated in FIG. 12, in step S1210, the terminal device transmits the second information to the network device.

In some implementations, the second information is used to indicate whether the terminal device supports receiving the first signal, or the second information is used to indicate whether the terminal device supports receiving the first signal and other signals/information on the same transmission resource, or the second information is used to indicate whether the terminal device supports the first signal transmitted in the first transmission mode, or the second information is used to indicate whether the terminal device supports receiving other signals/information for which rate matching is not performed based on the first signal.

In the embodiments of the present application, the second information mentioned above may be carried through one or more of the following message transmission modes: an NR positioning protocol A (NRPPa) message, a long term evolution positioning protocol (LPP) message, a non-access stratum (NAS) message, a radio resource control (RRC) message, a media access control control element (MAC CE), uplink control information (UCI), a physical uplink control channel (PUCCH), a physical uplink shared channel (PUSCH), an Xn interface message, an F1 interface message, an E1 interface message, an NG interface message, a core network service-based architecture message, or an AI-specific message.

In the embodiments of the present application, the second information mentioned above may be carried through one or more of: a unicast message, a multicast message, or a broadcast message.

The unicast message may be understood as information transmitted in a one-to-one manner, i.e., a message transmitted from a transmitting end to a receiving end. In this case, the source transmits the unicast message via the unicast channel, and only the terminal device or the network device allocated with the corresponding unicast resource may attempt to receive the unicast message. The unicast message may also be referred to as dedicated signaling.

The multicast message may be understood as information transmitted in a one-to-many manner, i.e., a message transmitted from a transmitting end to multiple receiving ends. In this case, the source transmits the multicast message via the multicast channel, and the terminal device or the network device within the coverage of the multicast signal and being a member of the group may attempt to receive the multicast message. The terminal device or network device obtains multicast channel-related resources when joining a group.

The broadcast message may be understood as information transmitted in a one-to-any manner, i.e., a message transmitted from a transmitting end to any receiving end. In this case, the source transmits the broadcast message via the broadcast channel, and any terminal devices or network devices within the coverage of the broadcast signal may attempt to receive the broadcast message.

The network device is an access network device, a core network device, an AI/ML model-related information management device, or an operation administration and maintenance (OAM) device. For example, the access network device is any one of: a gNB, a centralized unit (CU), a distributed unit (DU), a centralized unit-control plane (CU-CP), or a centralized unit-user plane (CU-UP).

For example, the core network device is any one of: a location management function (LMF) network element, a network slice selection function (NSSF), a authentication server function (AUSF), a unified data management (UDM), an access and mobility management function (AMF), a session management function (SMF), a policy control function (PCF), a user plane function (UPF), a sensing function (SF), or a network data analytics function (NWDAF) network element.

The method embodiments of the present application have been described in detail above with reference to FIG. 1 to FIG. 12. The apparatus embodiments of the present application will be described in detail with reference to FIG. 13 to FIG. 15. It should be understood that the description of the method embodiments corresponds to the description of the apparatus embodiments. Therefore, for parts not described in detail, reference may be made to the method embodiments above.

FIG. 13 is a schematic diagram of a terminal device according to the embodiments of the present application. The terminal device 1300 illustrated in FIG. 13 includes a receiving unit 1310.

The receiving unit 1310 is configured to receive first information transmitted by a network device, where the first information is associated with a first signal; the first signal includes one or more of: a synchronization signal, cell broadcast information, or a reference signal associated with cell broadcast information; and a transmission resource for transmitting the first signal is available for transmitting other signals/information other than the first signal.

In some implementations, the first information is used to determine that a transmission mode of the first signal is a first transmission mode, where a transmission resource occupied by a signal transmitted in the first transmission mode is available for transmitting the other signals/information.

In some implementations, the first information is used to indicate that the transmission mode of the first signal is the first transmission mode.

In some implementations, the first signal corresponds to a target frequency point, the first information is used to indicate that one or more signals corresponding to the target frequency point are in the first transmission mode, and each of the one or more signals includes one or more of: a synchronization signal, cell broadcast information, or a reference signal associated with the cell broadcast information.

In some implementations, the first signal corresponds to a target cell, and the first information is used to indicate that one or more signals corresponding to the target cell are in the first transmission mode; or the target cell belongs to a target cell group, and the first information is used to indicate that one or more signals corresponding to the target cell group are in the first transmission mode, where each of the one or more signals includes one or more of: a synchronization signal, cell broadcast information, or a reference signal associated with the cell broadcast information.

In some implementations, the target cell is a serving cell, or the target cell is a neighboring cell.

In some implementations, the first information is carried in an RRC message and/or a system message.

In some implementations, the first information is used to indicate one or more of: whether to perform rate matching based on the first signal when transmitting the other signals/information; transmitting or not transmitting the other signals/information on a transmission resource occupied by the first signal; a transmission resource used for transmitting the other signals/information within the transmission resource occupied by the first signal; or a transmission resource not used for transmitting the other signals/information within the transmission resource occupied by the first signal.

In some implementations, the first information is used to configure the first signal for the terminal device.

In some implementations, the first information is used to configure one or more of: a transmission format of the first signal; a time domain position of the first signal; a frequency domain position of the first signal; or a transmission period of the first signal.

In some implementations, the first information includes the first signal.

In some implementations, the first information is used to indicate a first model for receiving the first signal.

In some implementations, the first information includes the first model; and/or the first information includes a model identifier of the first model.

In some implementations, the first information is used to indicate a dataset for training the first model, and the first model is used to receive the first signal.

In some implementations, the first information includes the dataset; and/or the first information includes an identifier of the dataset.

In some implementations, the terminal device further includes: a transmitting unit, configured to transmit second information to the network device, where the second information is used to indicate whether the terminal device supports receiving the first signal.

In some implementations, the first signal satisfies one or more of: the first signal being used for measurement; the first signal being a non-cell defining signal; or a frequency point position corresponding to the first signal being different from a frequency point position corresponding to a second signal, where a signal type of the second signal is the same as a signal type of the first signal, and a transmission mode of the second signal is different from the first transmission mode.

In some implementations, the other signals/information include a signal for carrying data and/or a signal for carrying control information.

FIG. 14 is a schematic diagram of a network device according to the embodiments of the present application. The network device 1400 illustrated in FIG. 14 includes a transmitting unit 1410.

The transmitting unit 1410 is configured to transmit first information to a terminal device, where the first information is associated with a first signal; the first signal includes one or more of: a synchronization signal, cell broadcast information, or a reference signal associated with cell broadcast information; and a transmission resource for transmitting the first signal is available for transmitting other signals/information other than the first signal.

In some implementations, the first information is used to determine that a transmission mode of the first signal is a first transmission mode, and a transmission resource occupied by a signal transmitted in the first transmission mode is available for transmitting the other signals/information.

In some implementations, the first information is used to indicate that the transmission mode of the first signal is the first transmission mode.

In some implementations, the first signal corresponds to a target frequency point, the first information is used to indicate that one or more signals corresponding to the target frequency point are transmitted in the first transmission mode, and each of the one or more signals includes one or more of: a synchronization signal, cell broadcast information, or a reference signal associated with cell broadcast information.

In some implementations, the first signal corresponds to a target cell, and the first information is used to indicate that one or more signals corresponding to the target cell are in the first transmission mode; or the target cell belongs to a target cell group, and the first information is used to indicate that one or more signals corresponding to the target cell group are in the first transmission mode, where each of the one or more signals includes one or more of: a synchronization signal, cell broadcast information, or a reference signal associated with cell broadcast information.

In some implementations, the target cell is a serving cell, or the target cell is a neighboring cell.

In some implementations, the first information is carried in an RRC message and/or a system message.

In some implementations, the first information is used to indicate one or more of: whether to perform rate matching based on the first signal when transmitting the other signals/information; transmitting or not transmitting the other signals/information on a transmission resource occupied by the first signal; a transmission resource used for transmitting the other signals/information within the transmission resource occupied by the first signal; or a transmission resource not used for transmitting the other signals/information within the transmission resource occupied by the first signal.

In some implementations, the first information is used to configure the first signal for the terminal device.

In some implementations, the first information is used to configure one or more of: a transmission format of the first signal; a time domain position of the first signal; a frequency domain position of the first signal; or a transmission period of the first signal.

In some implementations, the first information includes the first signal.

In some implementations, the first information is used to indicate a first model for receiving the first signal.

In some implementations, the first information includes the first model; and/or the first information includes a model identifier of the first model.

In some implementations, the first information is used to indicate a dataset for training the first model, and the first model is used to receive the first signal.

In some implementations, the first information includes the dataset; and/or the first information includes an identifier of the dataset.

In some implementations, the network device further includes: a receiving unit, configured to receive second information transmitted by the terminal device, where the second information is used to indicate whether the terminal device supports receiving the first signal.

In some implementations, the first signal satisfies one or more of: the first signal being used for measurement; the first signal being a non-cell defining signal; or a frequency point position corresponding to the first signal being different from a frequency point position corresponding to a second signal, where a signal type of the second signal is the same as a signal type of the first signal, and a transmission mode of the second signal is different from a first transmission mode.

In some implementations, the other signals/information include a signal for carrying data, and/or a signal for carrying control information.

In an optional embodiment, the receiving unit 1310 may be a transceiver 1530. The terminal device 1300 may further include a processor 1510 and a memory 1520, as specifically illustrated in FIG. 15.

In an optional embodiment, the transmitting unit 1410 may be a transceiver 1530. The network device 1400 may further include a processor 1510 and a memory 1520, as specifically illustrated in FIG. 15.

FIG. 15 is a schematic structural diagram of a communication apparatus according to the embodiments of the present application. The dashed lines in FIG. 15 indicate that the unit or module is optional. The apparatus 1500 may be used to implement the methods described in the method embodiments above. The apparatus 1500 may be a chip, a terminal device or a network device.

The apparatus 1500 may include one or more processors 1510. The processor 1510 may enable the apparatus 1500 to implement the methods described in the method embodiments above. The processor 1510 may be a general-purpose processor or a dedicated processor. For example, the processor may be a central processing unit (CPU). Alternatively, the processor may further be another general-purpose processor, a digital signal processor (DSP), an application specific integrated circuit (ASIC), a field programmable gate array (FPGA), or other programmable logic devices, discrete gate or transistor logic devices, discrete hardware components, and the like. The general-purpose processor may be a microprocessor, or may also be any traditional processor, and the like.

The apparatus 1500 may further include one or more memories 1520. The memory 1520 has a program stored thereon, and the program may be run by the processor 1510, to enable the processor 1510 to perform the methods described in the method embodiments above. The memory 1520 may be independent of the processor 1510 or integrated into the processor 1510.

The apparatus 1500 may further include a transceiver 1530. The processor 1510 may communicate with other devices or chips through the transceiver 1530. For example, the processor 1510 may transmit and receive data with other devices or chips via the transceiver 1530.

The embodiments of the present application further provide a computer-readable storage medium, configured to store a program. The computer-readable storage medium may be applied to the terminal or the network device provided in the embodiments of the present application, and the program enables a computer to perform the methods performed by the terminal or the network device in the various embodiments of the present application.

The embodiments of the present application further provide a computer program product. The computer program product includes a program. The computer program product may be applied to the terminal or the network device provided in the embodiments of the present application, and the program enables a computer to perform the methods performed by the terminal or the network device in the various embodiments of the present application.

The embodiments of the present application further provide a computer program. The computer program may be applied to the terminal or the network device provided in the embodiments of the present application, and the computer program enables a computer to perform the methods performed by the terminal or the network device in the various embodiments of the present application.

It should be understood that the terms "system" and "network" in the present application may be used interchangeably. Additionally, the terms used in the present application are only intended to explain specific embodiments of the present application and are not intended to limit the application. In the specification and claims of the present application, as well as the accompanying drawings, terms such as "first," "second," "third," and "fourth" are used to distinguish different objects and not to describe a specific order. Furthermore, the terms "include" and "have" and any variations thereof are intended to cover non-exclusive inclusion.

In the embodiments of the present application, the term "indicate" mentioned may mean a direct indication, or an indirect indication, or represent that there is an association relationship. For example, A indicating B may mean that A directly indicates B, e.g., that B may be obtained through A, or it may mean that A indirectly indicates B, e.g., that A indicates C, and B may be obtained through C, or it may mean that there is an association relationship between A and B.

In the embodiments of the present application, "B corresponding to A" represents that B is associated with A, and B may be determined based on A. However, it should further be understood that determining B based on A does not mean that B is determined solely based on A, and B may further be determined based on A and/or other information.

In the embodiments of the present application, the term "correspond" may mean there is a relationship of direct or indirect correspondence between the two, or there is an association relationship between the two, or may be a relationship of indicating and being indicated, or configuring and being configured, or the like.

In the embodiments of the present application, "predefined" or "preconfigured" may be implemented by pre-storing corresponding codes, tables or other means that may indicate relevant information in devices (e.g., including terminal devices and network devices). The present application does not limit the specific implementation manner. For example, predefined may refer to what is defined in the protocol.

In the embodiments of the present application, the "protocol" may refer to standard protocols in the field of communications, such as LTE protocols, NR protocols, and related protocols applied in future communication systems, which are not limited in the present application.

In the embodiments of the present application, the term "and/or" is merely used to describe an association relationship between associated objects, and indicates that there may be three relationships. For example, "A and/or B" may represent: that A exists alone, that both A and B exist, or that B exists alone. Additionally, the character "/" herein generally indicates that the related objects before and after this character are in an "or" relationship.

In various embodiments of the present application, the magnitude of the serial number of each of the above processes does not mean the order of execution. The order of execution of each process should be determined by its function and internal logic, and should not constitute any limitation on the implementation process of the embodiments of the present application.

In the several embodiments provided in the present application, it should be understood that, the disclosed systems, apparatuses and methods may be implemented in other ways. For example, the apparatus embodiments described above are only schematic, for example, the division of the units is only division of logical functions, and there may be other division methods in actual implementations. For example, multiple units or components may be combined or integrated into another system, or some features may be ignored or not performed. Additionally, the coupling or direct coupling or communication connection between each other as shown or discussed may be indirect coupling or communicative connection of apparatus or units through some interfaces, which may be electrical, mechanical, or in other forms.

The units illustrated as separate components may be or may not be physically separated, and the components shown as units may be or may not be physical units, which may be located in one place, or may be distributed onto multiple network units. A part or all of the units may be selected according to actual needs, to implement the purpose of the schemes of the embodiments.

Additionally, various functional units in various embodiments of the present application may be integrated into one processing unit, or the various units may exist physically separately, or two or more units may be integrated into one unit.

In the above embodiments, implementations may be achieved entirely or partially through software, hardware, firmware or any combination thereof. When implemented using software, it may be implemented entirely or partially in the form of a computer program product. The computer program product includes one or more computer instructions. When the computer program instructions are loaded and executed on a computer, the processes or functions according to the embodiments of the present application are generated entirely or partially. The computer may be a general-purpose computer, a special-purpose computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server or data center to another website, computer, server or data center via wired (e.g., coaxial cable, optical fiber, digital subscriber line (DSL)) or wireless (e.g., infrared, radio, microwave) means. The computer-readable storage medium may be any available medium that can be read by a computer or a data storage device such as a server or data center that integrates one or more available mediums. The available medium may be a magnetic medium (e.g., floppy disk, hard disk, magnetic tape), an optical medium (e.g., digital video disc (DVD)), or a semiconductor medium (e.g., solid state disk (SSD)), and the like.

The above content is only specific implementations of the present application, but the protection scope of the present application is not limited thereto, and any skilled person familiar with the present technical field could readily conceive of changes or replacements within the technical scope disclosed in the present application, which shall all fall within the protection scope of the present application. Therefore, the protection scope of the present application shall be subject to the protection scope of the claims.

## Claims

1. A wireless communication method, comprising:
receiving, by a terminal device, first information transmitted by a network device, the first information being associated with a first signal;
wherein the first signal comprises one or more of: a synchronization signal, cell broadcast information, or a reference signal associated with the cell broadcast information; and
a transmission resource for transmitting the first signal is available for transmitting other signals/information other than the first signal.

2. The method according to claim 1, wherein the first information is used to determine that a transmission mode of the first signal is a first transmission mode, and a transmission resource occupied by a signal transmitted in the first transmission mode is available for transmitting the other signals/information.

3. The method according to claim 2, wherein the first information is used to indicate that the transmission mode of the first signal is the first transmission mode.

4. The method according to claim 2, wherein the first signal corresponds to a target frequency point, the first information is used to indicate that one or more signals corresponding to the target frequency point are in the first transmission mode, and each of the one or more signals comprises one or more of: a synchronization signal, cell broadcast information, or a reference signal associated with the cell broadcast information.

5. The method according to claim 2, wherein the first signal corresponds to a target cell, and the first information is used to indicate that one or more signals corresponding to the target cell are in the first transmission mode; or
the target cell belongs to a target cell group, and the first information is used to indicate that one or more signals corresponding to the target cell group are in the first transmission mode;
wherein each of the one or more signals comprises one or more of: a synchronization signal, cell broadcast information, or a reference signal associated with the cell broadcast information.

6. The method according to claim 5, wherein the target cell is a serving cell, or the target cell is a neighboring cell.

7. The method according to any one of claims 2 to 6, wherein the first information is carried in a radio resource control (RRC) message and/or a system message.

8. The method according to any one of claims 1 to 7, wherein the first information is used to indicate one or more of:
whether to perform rate matching based on the first signal when transmitting the other signals/information;
transmitting or not transmitting the other signals/information on a transmission resource occupied by the first signal;
a transmission resource used for transmitting the other signals/information within the transmission resource occupied by the first signal; or
a transmission resource not used for transmitting the other signals/information within the transmission resource occupied by the first signal.

9. The method according to any one of claims 1 to 8, wherein the first information is used to configure the first signal for the terminal device.

10. The method according to claim 9, wherein the first information is used to configure one or more of: a transmission format of the first signal; a time domain position of the first signal; a frequency domain position of the first signal; or a transmission period of the first signal.

11. The method according to any one of claims 1 to 10, wherein the first information comprises the first signal.

12. The method according to any one of claims 1 to 11, wherein the first information is used to indicate a first model for receiving the first signal.

13. The method according to claim 12, wherein the first information comprises the first model; and/or the first information comprises a model identifier of the first model.

14. The method according to any one of claims 1 to 13, wherein the first information is used to indicate a dataset for training a first model, and the first model is used to receive the first signal.

15. The method according to claim 14, wherein the first information comprises the dataset; and/or the first information comprises an identifier of the dataset.

16. The method according to any one of claims 1 to 15, wherein the method further comprises:
transmitting, by the terminal device, second information to the network device, the second information being used to indicate whether the terminal device supports receiving the first signal.

17. The method according to any one of claims 1 to 16, wherein the first signal satisfies one or more of:
the first signal being used for measurement;
the first signal being a non-cell defining signal; or
a frequency point position corresponding to the first signal being different from a frequency point position corresponding to a second signal, wherein a signal type of the second signal is the same as a signal type of the first signal, and a transmission mode of the second signal is different from a first transmission mode.

18. The method according to any one of claims 1 to 17, wherein the other signals/information comprise a signal for carrying data and/or a signal for carrying control information.

19. A wireless communication method, comprising:
transmitting, by a network device, first information to a terminal device, the first information being associated with a first signal;
wherein the first signal comprises one or more of: a synchronization signal, cell broadcast information, or a reference signal associated with the cell broadcast information; and
a transmission resource for transmitting the first signal is available for transmitting other signals/information other than the first signal.

20. The method according to claim 19, wherein the first information is used to determine that a transmission mode of the first signal is a first transmission mode, and a transmission resource occupied by a signal transmitted in the first transmission mode is available for transmitting the other signals/information.

21. The method according to claim 20, wherein the first information is used to indicate that the transmission mode of the first signal is the first transmission mode.

22. The method according to claim 20, wherein the first signal corresponds to a target frequency point, the first information is used to indicate that one or more signals corresponding to the target frequency point are in the first transmission mode, and each of the one or more signals comprises one or more of: a synchronization signal, cell broadcast information, or a reference signal associated with the cell broadcast information.

23. The method according to claim 20, wherein the first signal corresponds to a target cell, and the first information is used to indicate that one or more signals corresponding to the target cell are in the first transmission mode; or
the target cell belongs to a target cell group, and the first information is used to indicate that one or more signals corresponding to the target cell group are in the first transmission mode;
wherein each of the one or more signals comprises one or more of: a synchronization signal, cell broadcast information, or a reference signal associated with the cell broadcast information.

24. The method according to claim 23, wherein the target cell is a serving cell, or the target cell is a neighboring cell.

25. The method according to any one of claims 20 to 24, wherein the first information is carried in a radio resource control (RRC) message and/or a system message.

26. The method according to any one of claims 19 to 25, wherein the first information is used to indicate one or more of:
whether to perform rate matching based on the first signal when transmitting the other signals/information;
transmitting or not transmitting the other signals/information on a transmission resource occupied by the first signal;
a transmission resource used for transmitting the other signals/information within the transmission resource occupied by the first signal; or
a transmission resource not used for transmitting the other signals/information within the transmission resource occupied by the first signal.

27. The method according to any one of claims 19 to 26, wherein the first information is used to configure the first signal for the terminal device.

28. The method according to claim 27, wherein the first information is used to configure one or more of: a transmission format of the first signal; a time domain position of the first signal; a frequency domain position of the first signal; or a transmission period of the first signal.

29. The method according to any one of claims 19 to 28, wherein the first information comprises the first signal.

30. The method according to any one of claims 19 to 29, wherein the first information is used to indicate a first model for receiving the first signal.

31. The method according to claim 30, wherein the first information comprises the first model; and/or the first information comprises a model identifier of the first model.

32. The method according to any one of claims 19 to 31, wherein the first information is used to indicate a dataset for training a first model, and the first model is used to receive the first signal.

33. The method according to claim 32, wherein the first information comprises the dataset; and/or the first information comprises an identifier of the dataset.

34. The method according to any one of claims 19 to 33, wherein the method further comprises:
receiving, by the network device, second information transmitted by the terminal device, the second information being used to indicate whether the terminal device supports receiving the first signal.

35. The method according to any one of claims 19 to 34, wherein the first signal satisfies one or more of:
the first signal being used for measurement;
the first signal being a non-cell defining signal; or
a frequency point position corresponding to the first signal being different from a frequency point position corresponding to a second signal, wherein a signal type of the second signal is the same as a signal type of the first signal, and a transmission mode of the second signal is different from a first transmission mode.

36. The method according to any one of claims 19 to 35, wherein the other signals/information comprise a signal for carrying data and/or a signal for carrying control information.

37. A terminal device, comprising:
a receiving unit, configured to receive first information transmitted by a network device, the first information being associated with a first signal;
wherein the first signal comprises one or more of: a synchronization signal, cell broadcast information, or a reference signal associated with the cell broadcast information; and
a transmission resource for transmitting the first signal is available for transmitting other signals/information other than the first signal.

38. The terminal device according to claim 37, wherein the first information is used to determine that a transmission mode of the first signal is a first transmission mode, and a transmission resource occupied by a signal transmitted in the first transmission mode is available for transmitting the other signals/information.

39. The terminal device according to claim 38, wherein the first information is used to indicate that the transmission mode of the first signal is the first transmission mode.

40. The terminal device according to claim 38, wherein the first signal corresponds to a target frequency point, the first information is used to indicate that one or more signals corresponding to the target frequency point are in the first transmission mode, and each of the one or more signals comprises one or more of: a synchronization signal, cell broadcast information, or a reference signal associated with the cell broadcast information.

41. The terminal device according to claim 38, wherein the first signal corresponds to a target cell, and the first information is used to indicate that one or more signals corresponding to the target cell are in the first transmission mode; or
the target cell belongs to a target cell group, and the first information is used to indicate that one or more signals corresponding to the target cell group are in the first transmission mode;
wherein each of the one or more signals comprises one or more of: a synchronization signal, cell broadcast information, or a reference signal associated with the cell broadcast information.

42. The terminal device according to claim 41, wherein the target cell is a serving cell, or the target cell is a neighboring cell.

43. The terminal device according to any one of claims 38 to 42, wherein the first information is carried in a radio resource control (RRC) message and/or a system message.

44. The terminal device according to any one of claims 37 to 43, wherein the first information is used to indicate one or more of:
whether to perform rate matching based on the first signal when transmitting the other signals/information;
transmitting or not transmitting the other signals/information on a transmission resource occupied by the first signal;
a transmission resource used for transmitting the other signals/information within the transmission resource occupied by the first signal; or
a transmission resource not used for transmitting the other signals/information within the transmission resource occupied by the first signal.

45. The terminal device according to any one of claims 37 to 44, wherein the first information is used to configure the first signal for the terminal device.

46. The terminal device according to claim 45, wherein the first information is used to configure one or more of: a transmission format of the first signal; a time domain position of the first signal; a frequency domain position of the first signal; or a transmission period of the first signal.

47. The terminal device according to any one of claims 37 to 46, wherein the first information comprises the first signal.

48. The terminal device according to any one of claims 37 to 47, wherein the first information is used to indicate a first model for receiving the first signal.

49. The terminal device according to claim 48, wherein the first information comprises the first model; and/or the first information comprises a model identifier of the first model.

50. The terminal device according to any one of claims 37 to 49, wherein the first information is used to indicate a dataset for training a first model, and the first model is used to receive the first signal.

51. The terminal device according to claim 50, wherein the first information comprises the dataset; and/or the first information comprises an identifier of the dataset.

52. The terminal device according to any one of claims 37 to 51, wherein the terminal device further comprises:
a transmitting unit, configured to transmit second information to the network device, the second information being used to indicate whether the terminal device supports receiving the first signal.

53. The terminal device according to any one of claims 37 to 52, wherein the first signal satisfies one or more of:
the first signal being used for measurement;
the first signal being a non-cell defining signal; or
a frequency point position corresponding to the first signal being different from a frequency point position corresponding to a second signal, wherein a signal type of the second signal is the same as a signal type of the first signal, and a transmission mode of the second signal is different from a first transmission mode.

54. The terminal device according to any one of claims 37 to 53, wherein the other signals/information comprise a signal for carrying data and/or a signal for carrying control information.

55. A network device, comprising:
a transmitting unit, configured to transmit first information to a terminal device, the first information being associated with a first signal;
wherein the first signal comprises one or more of: a synchronization signal, cell broadcast information, or a reference signal associated with the cell broadcast information; and
a transmission resource for transmitting the first signal is available for transmitting other signals/information other than the first signal.

56. The network device according to claim 55, wherein the first information is used to determine that a transmission mode of the first signal is a first transmission mode, and a transmission resource occupied by a signal transmitted in the first transmission mode is available for transmitting the other signals/information.

57. The network device according to claim 56, wherein the first information is used to indicate that the transmission mode of the first signal is the first transmission mode.

58. The network device according to claim 56, wherein the first signal corresponds to a target frequency point, the first information is used to indicate that one or more signals corresponding to the target frequency point are in the first transmission mode, and each of the one or more signals comprises one or more of: a synchronization signal, cell broadcast information, or a reference signal associated with the cell broadcast information.

59. The network device according to claim 56, wherein the first signal corresponds to a target cell, and the first information is used to indicate that one or more signals corresponding to the target cell are in the first transmission mode; or
the target cell belongs to a target cell group, and the first information is used to indicate that one or more signals corresponding to the target cell group are in the first transmission mode;
wherein each of the one or more signals comprises one or more of: a synchronization signal, cell broadcast information, or a reference signal associated with the cell broadcast information.

60. The network device according to claim 59, wherein the target cell is a serving cell, or the target cell is a neighboring cell.

61. The network device according to any one of claims 56 to 60, wherein the first information is carried in a radio resource control (RRC) message and/or a system message.

62. The network device according to any one of claims 55 to 61, wherein the first information is used to indicate one or more of:
whether to perform rate matching based on the first signal when transmitting the other signals/information;
transmitting or not transmitting the other signals/information on a transmission resource occupied by the first signal;
a transmission resource used for transmitting the other signals/information within the transmission resource occupied by the first signal; or
a transmission resource not used for transmitting the other signals/information within the transmission resource occupied by the first signal.

63. The network device according to any one of claims 55 to 62, wherein the first information is used to configure the first signal for the terminal device.

64. The network device according to claim 63, wherein the first information is used to configure one or more of: a transmission format of the first signal; a time domain position of the first signal; a frequency domain position of the first signal; or a transmission period of the first signal.

65. The network device according to any one of claims 55 to 64, wherein the first information comprises the first signal.

66. The network device according to any one of claims 55 to 65, wherein the first information is used to indicate a first model for receiving the first signal.

67. The network device according to claim 66, wherein the first information comprises the first model; and/or the first information comprises a model identifier of the first model.

68. The network device according to any one of claims 55 to 67, wherein the first information is used to indicate a dataset for training a first model, and the first model is used to receive the first signal.

69. The network device according to claim 68, wherein the first information comprises the dataset; and/or the first information comprises an identifier of the dataset.

70. The network device according to any one of claims 55 to 69, wherein the network device further comprises:
a receiving unit, configured to receive second information transmitted by the terminal device, the second information being used to indicate whether the terminal device supports receiving the first signal.

71. The network device according to any one of claims 55 to 70, wherein the first signal satisfies one or more of:
the first signal being used for measurement;
the first signal being a non-cell defining signal; or
a frequency point position corresponding to the first signal being different from a frequency point position corresponding to a second signal, wherein a signal type of the second signal is the same as a signal type of the first signal, and a transmission mode of the second signal is different from a first transmission mode.

72. The network device according to any one of claims 55 to 71, wherein the other signals/information comprise a signal for carrying data and/or a signal for carrying control information.

73. A terminal device, comprising: a transceiver, a memory and a processor, wherein the memory is configured to store a program, the processor is configured to call the program in the memory and control the transceiver to receive or transmit a signal, to enable the terminal device to perform the method according to any one of claims 1 to 18.

74. A network device, comprising: a transceiver, a memory and a processor, wherein the memory is configured to store a program, the processor is configured to call the program in the memory and control the transceiver to receive or transmit a signal, to enable the network device to perform the method according to any one of claims 19 to 36.

75. An apparatus, comprising: a processor configured to call a program from a memory, to enable the apparatus to perform the method according to any one of claims 1 to 36.

76. A chip, comprising: a processor configured to call a program from a memory, to enable a device equipped with the chip to perform the method according to any one of claims 1 to 36.

77. A computer-readable storage medium, having a program stored thereon, wherein the program enables a computer to perform the method according to any one of claims 1 to 36.

78. A computer program product, comprising: a program, wherein the program enables a computer to perform the method according to any one of claims 1 to 36.

79. A computer program, wherein the computer program enables a computer to perform the method according to any one of claims 1 to 36.
